(19) Europäisches Patentamt
European Patent Office
Office européen des brevets

(11) Publication number: 0 250 204 A2

(12) EUROPEAN PATENT APPLICATION

(21) Application number: 87305320.1

(51) Int. Cl.⁴: B60C 9/20

(22) Date of filing: 16.06.87

(30) Priority: 17.06.86 US 875035

(43) Date of publication of application: 23.12.87 Bulletin 87/52

(84) Designated Contracting States: BE DE FR LU NL

(71) Applicant: GENERAL TIRE INC.
One General Street
Akron Ohio 44329(US)

(72) Inventor: Scott, Jimmie L.
2436 Silver Springs Drive
Stow Ohio 44224(US)
Inventor: Lambillotte, Bruce D.
2402 Woodpark Road
Fairlawn Ohio 44313(US)

(74) Representative: Paget, Hugh Charles Edward et al
MEWBURN ELLIS & CO. 2/3 Cursitor Street
London EC4A 1BQ(GB)

(54) **Belts in pneumatic tires.**

(57) A pneumatic tire contains between the tread and carcass ply one or more substantially circumferential belts of parallel twisted singles aramid yarns of poly(p-phenylene-terephthalamide). Such tires have the advantage of lightness, without undesirable loss of other properties.

EP 0 250 204 A2

## BELTS IN PNEUMATIC TIRES

This invention relates to pneumatic tires.

It is well known to provide a circumferential belt between the tread and the carcass ply or plies of a pneumatic tire.

An object of this invention is to provide a novel belt for pneumatic tires.

The invention is set out in claim 1.

In the present invention the use of at least one substantially circumferential belt of a plurality of parallel twisted aramid singles yarns between the tread and the carcass ply or plies of a pneumatic tire provides equivalent or better dynamomenter performance relative to a steel belted control. Twisted singles aramid belt reinforced tires were on the average about 1.45 pounds lighter than the steel belted control tires. Plunger test results were slightly lower (relative to steel belted tires) for tires reinforced with twisted singles aramid belts. However, the plunger values for twisted singles aramid belt reinforced tires were well above DOT and auto manufacturer's minimum requirements. The aramid used was poly(p-phenylene terephthalamide), e.g.

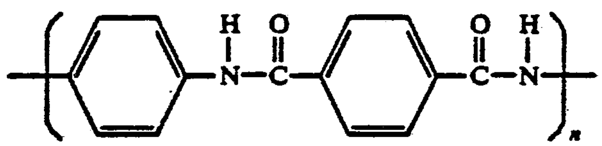

where n is a number, which is available from duPont under the trade name KEVLAR. Preferred are belts with 10 to 22 ends per inch, of yarn of 2000-4000 denier having 3 to 6 turns per inch.

Embodiments of the invention are described below by way of example with reference to the accompanying drawings.

As shown in Fig. 1, which is a vertical cross section of a vulcanized pneumatic tire, 1 and 1 are the chafers which may contain fabric and which wrap around the beads. 2 and 2 are the bead fillers. The inner liner is shown at 3 and usually is of butyl, brominated butyl or chlorinated butyl rubber. A carcass ply of rubberized fabric is shown at 4. 5-5 and 6-6 are the bead bundles and rim strips, respectively, of the tire. The white sidewall is shown at 7. The sidewalls are shown at 8-8, and the wingtips are shown at 9-9. The belts are shown at 10 and 10. The tire, also, contains a tread base 11, tread cap 12 and grooves 13-13. The tire is shown mounted on a wheel such as of steel containing rim flange 14-14 and a rim 15.

FIG. 2 is a top plan view comparing conventional aramid cord 20 with twisted aramid singles yarn 21 used in the present invention. Aramid cord 20 contains ply twisted ends 22-22 which are cable twisted to give cord 20. Thus, cord 20 is ply and cable twisted and is depicted as a 3000/1/2 (denier, cord, number of yarns) cord. On the other hand, yarn 21 has only a ply twist (3000/1). Yarn 21 is easier and less expensive to make, has a lower gauge, has a higher modulus and provides improved high speed performance as compared to cord 20.

FIG. 3 is a partial vertical sectional view of a tire showing first belt 30 and second belt 31 in a pyramid belt layup below tread 32 of the tire. The manufacture of the belt material does not vary drastically from that of the ply stock. The yarns are dipped in an adhesive, dried and covered with a rubber skim coat for adhesion to the tread and carcass ply. The belt plies are normally applied as two separate widths with the wider one being on the bottom (pyramid belts).

The belts act as a non-extensible band that affects the cornering ability of the tire, the footprint shape and pressure distribution, the revolutions per mile and the traction characteristics of the tire. The belts are normally applied so that they have a relatively low angle in the cured tire, 20 degrees off of circumferential. Due to pantographing during expansion for curing in the mold, the belt widths and angles decrease during this expansion and the end count increases.

FIG. 4 is another partial vertical sectional view of a tire having belts 40-41 of equal width disposed below tread 42.

FIG. 5 is a partial vertical sectional view of a tire having belts 50-51 in an umbrella arrangement below tread 52.

FIG. 6 is a partial vertical sectional view of a tire having top belt 60 folded on the ends. Belt 61 is below belt 60. Both belts are below tread 62.

FIG. 7 is a partial vertical sectional view of a tire having belts 70-71 with belt edge tape 72 covering the ends or edges of the belts which are below tread 73. There is a belt edge tape on the opposite end of the belts.

All of the yarns of each of the belts shown in the drawings are parallel to each other, and the resulting belts are positioned substantially circumferentially about the tire carcass.

The present invention can be used in the manufacture of pneumatic tires such as passenger, truck, off-the-road, bus, farm, airplane, giant, motorcycle, trailer, recreational vehicle and the like tires. The tires can be bias-belted or radial (preferred) tires.

The following example will serve to illustrate the present invention with more particularity to those skilled in the art.

## Example

P185/80R13 white sidewall radial passenger tires were built and tested. All tires had two substantially circumferential belts, each having a plurality of parallel cords and one carcass ply. Some of the tires had belt edge tapes. The tires are grouped below according to their belt construction.

Group A. Belts of parallel steel cords 18 EPI (Ends per Inch) of 4x0.25 mm brass plated steel tire cords. The carcass ply was 29 EPI 1000/1/3 (denier, cord, number of yarns) of Celanese T-111 polyester having 10.0x10.0 TPI (ten turns per inch back cabled at 10 turns per inch). (1 inch = 2.5 cm. 1 denier = 1.1 dtex).

Group B. Aramid belts with 16 EP1 of 3000/1 (denier/1 yarn) twisted singles yarn having 4.5 TPI. The aramid was KEVLAR, poly(p-phenylene terephthalamide),

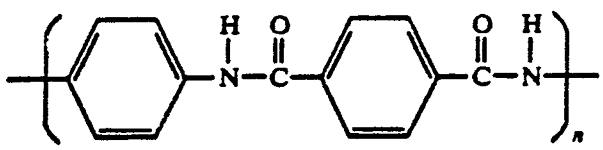

where n is a number, duPont. The carcass plies were the same as those of Group A.

Group C. Belts (16 EP1) of aramid (KEVLAR) 3000/1 singles yarns having 4.5 TPI. Same carcass ply as Group A. Belt edge tapes were used on the edges of the belts which were 19x19 thread count 840 denier nylon (polycaprolactam) square woven fabric.

Group D. Belts (16 EP1) of aramid (KEVLAR) 3000/1 singles yarns having 4.5 TPI. Carcass ply of 24 EPI of 1890/1 twisted singles nylon 6.6 having 3.0 TPI. Nylon 6.6 is a type of nylon made by condensing hexamethylene diamine with adipic acid.

Group E. Belts (16 EPI) of aramid (KEVLAR) 3000/1 singles yarns having 4.5 TPI. Same carcass ply as Group D. Same belt edge tapes as Group C.

The results on tire performance tests are shown below:

1

Average Cured Tire Weight In Pounds

| Group | A | B | C | D | E |
|---|---|---|---|---|---|
| Weight in pounds | 19.40 | 17.90 | 18.00 | 16.20 | 16.20 |

2

Step Speed Dynamometer

| Group | A | B | C | D | E |
|---|---|---|---|---|---|
| Miles Completed At Failure | 444 | 444 | 485 | 488 | 504 |

All tires exhibited similar failure modes: shoulder and rib separation.

3

Step Load Dynamometer

| Group | A | B | C | D | E |
|---|---|---|---|---|---|
| Miles Completed At Failure | 5044 | 5037 | 5069 | 4676 | 5113 |

All tires exhibited similar failure modes: separation of lower sidewall.

4

Measurement Of Tire Plunger Energy

| Group | A | B | C | D | E |
|---|---|---|---|---|---|
| Inch Pounds | 4718 | 4301 | 3837 | 4691 | 4734 |

Quality Assurance minimum is 2300.

5

67" Rolling Resistance

| Group | A | B | C | D | E |
| --- | --- | --- | --- | --- | --- |
| Pounds of Force | 7.33 | 7.25 | 7.25 | 6.84 | 6.92 |

Test method: 37.7 psi, 899 lbs.load.

6

Twin Roll Rolling Resistance

| Group | A | B | C | D | E |
| --- | --- | --- | --- | --- | --- |
| Pounds of Force | 17.16 | 16.85 | 16.91 | 16.89 | 16.92 |

7

Force & Moment Cornering Coefficient

| Group | A | B | C | D | E |
| --- | --- | --- | --- | --- | --- |
| 100% Load | .155 | .136 | .145 | .134 | .141 |

1% Slip Angle

Maximum permitted: 0.170-0.195.

8

Force & Moment Aligning Torque

| Group | A | B | C | D | E |
| --- | --- | --- | --- | --- | --- |
| 100% Load | 8.4 | 8.5 | 8.2 | 8.7 | 8.4 |

1.0% Slip Angle, MM

Specification minimum is 6.0.

9

Force & Moment H-Function

| Group | A | B | C | D | E |
| --- | --- | --- | --- | --- | --- |
| 100% Load | 0.040 | -0.0150 | -0.005 | -0.020 | -0.010 |

1.0% Slip Angle

For high-load tires, the recommended minimum is 0.040 (this is less important for automobile tires).

10

Force & Moment G-Function

| Group | A | B | C | D | E |
| --- | --- | --- | --- | --- | --- |
| 100% Load | 0.376 | 0.329 | 0.341 | 0.326 | 0.354 |

1.0% Slip Angle

Specification is 0.15 to 0.35.

11

Measurement Of Overall Tire Diameter

| Group | A | B | C | D | E |
|---|---|---|---|---|---|
| Inches | 24.62 | 24.76 | 24.75 | 24.74 | 24.71 |

12

Measurement Of Tread Radius

| Group | A | B | C | D | E |
|---|---|---|---|---|---|
| Inches | 14.4 | 11.1 | 10.5 | 11.7 | 13.0 |

13

Measurement Of Tread Arc Width

| Group | A | B | C | D | E |
|---|---|---|---|---|---|
| Inches | 5.01 | 5.04 | 5.04 | 5.03 | 5.06 |

14

Measurement Of Tire Section Width

| Group | A | B | C | D | E |
|---|---|---|---|---|---|
| Inches | 7.64 | 7.51 | 7.52 | 7.46 | 7.46 |

15

Measurement Of Tire Shoulder Diameter

| Group | A | B | C | D | E |
|---|---|---|---|---|---|
| Inches | 24.1 | 24.1 | 24.2 | 24.3 | 24.4 |

16

Measurement Of Tire Tread Flatness

| Group | A | B | C | D | E |
|---|---|---|---|---|---|
| Inches | .28 | .34 | .32 | .32 | .31 |

## Claims

1. A pneumatic tire containing positioned between the tread and at least one carcass ply at least one substantially circumferential belt adhered to said tread and carcass ply, said belt comprising a plurality of parallel twisted singles yarns of aramid.

2. A pneumatic tire according to claim 1 wherein said belt has 10 to 22 ends per inch and said yarns are 3000 denier yarn having 4.5 turns per inch and said tire has two such belts of said yarns.

3. A pneumatic tire according to claim 1 or claim 2, where said belts contain belt edge tape on the edges or ends of the belts.

4. A pneumatic tire according to any one of claims 1 to 3 wherein said aramid is poly(p-phenylene terephthalamide).

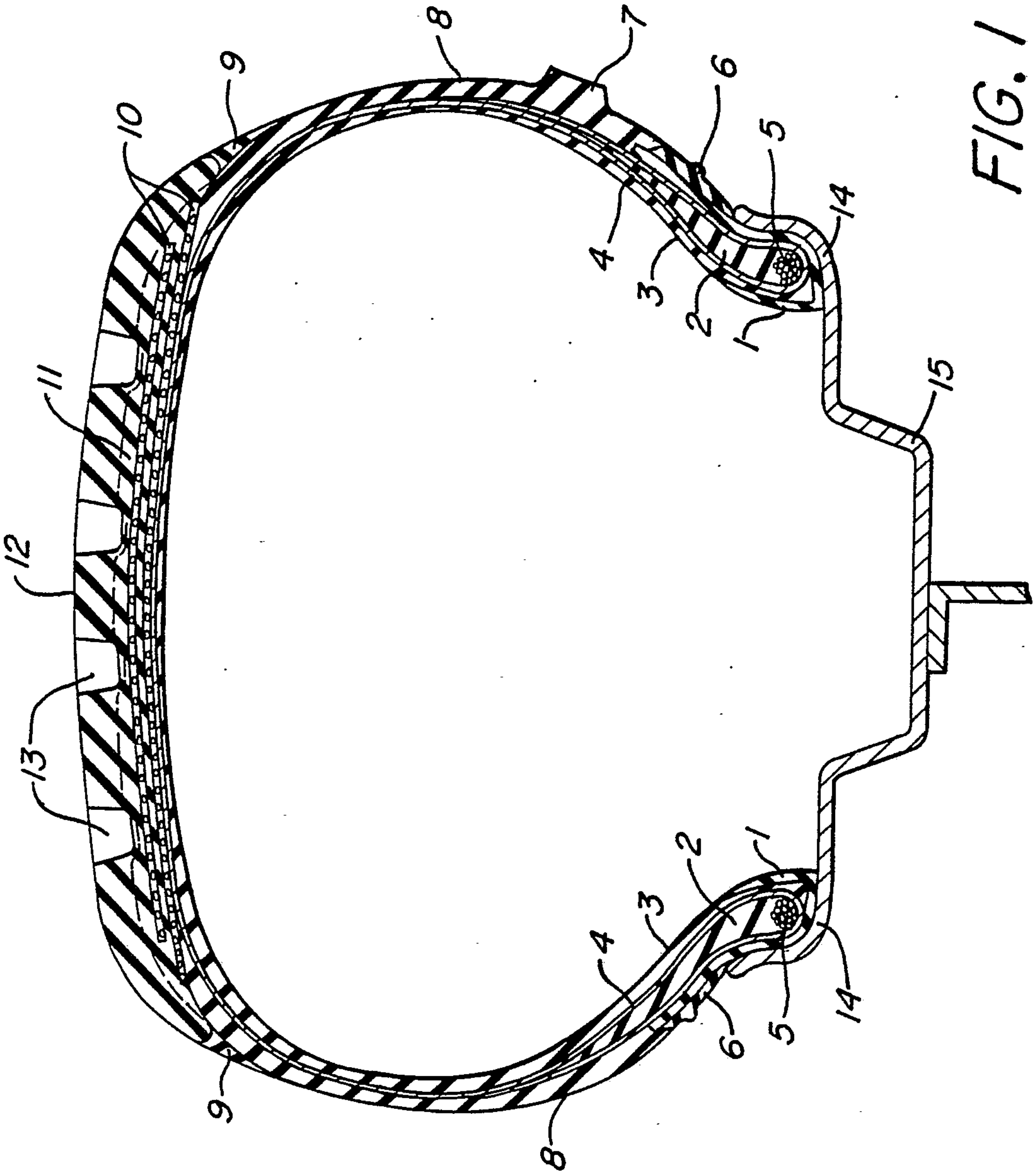


FIG. 1

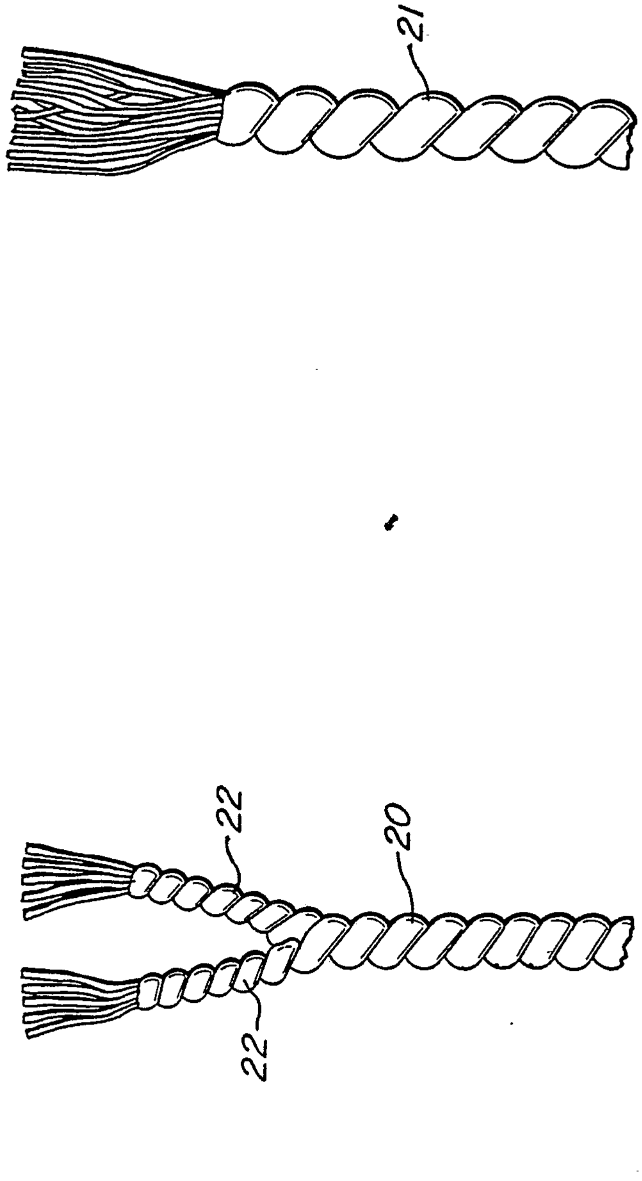


FIG. 2

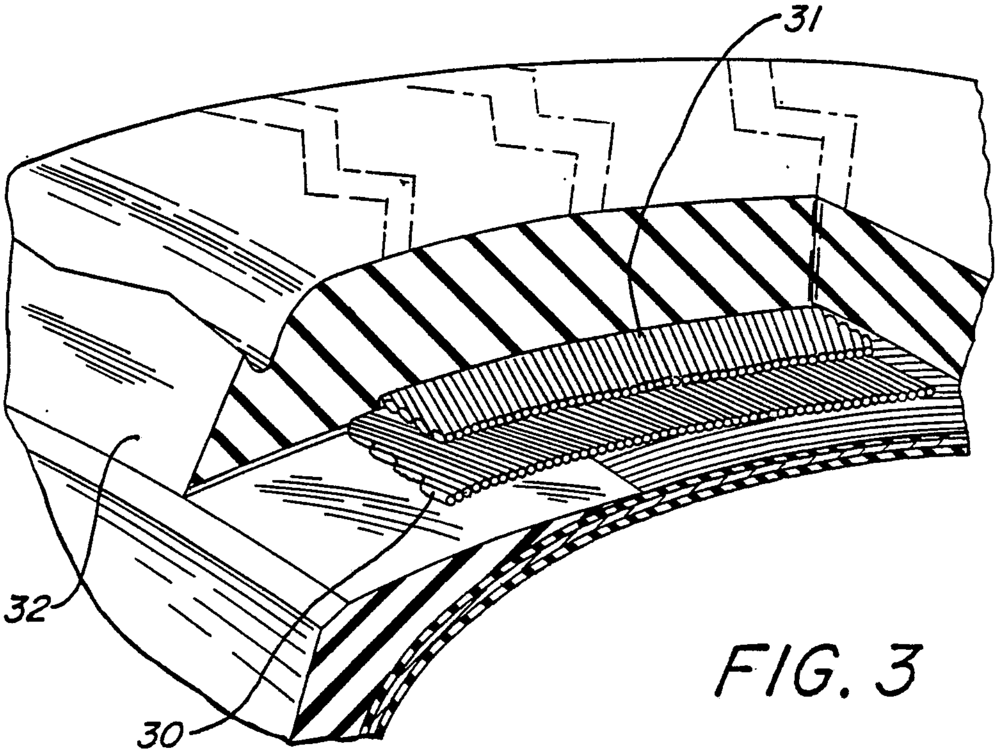


FIG. 3

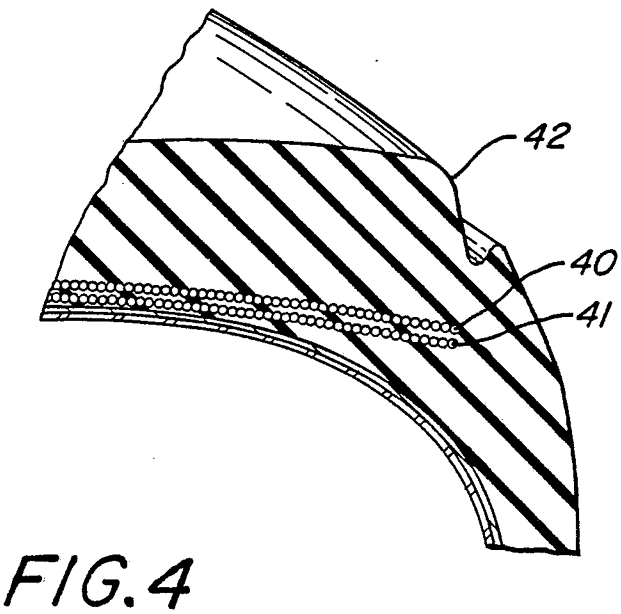


FIG.4

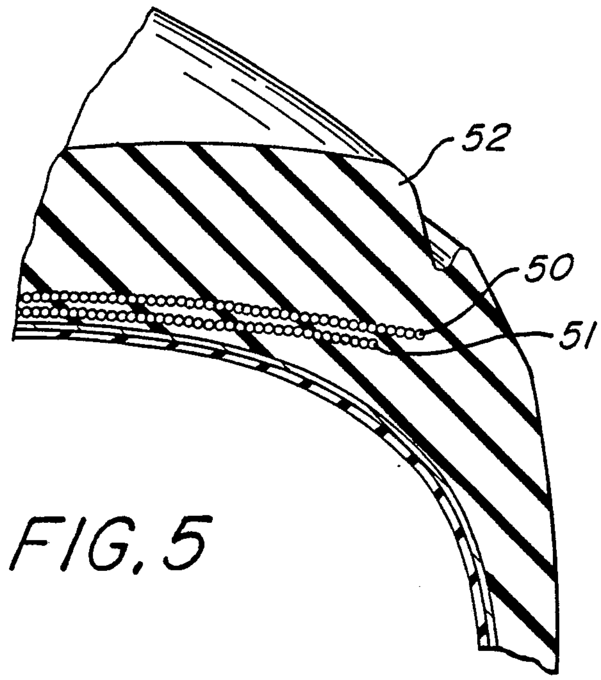


FIG. 5

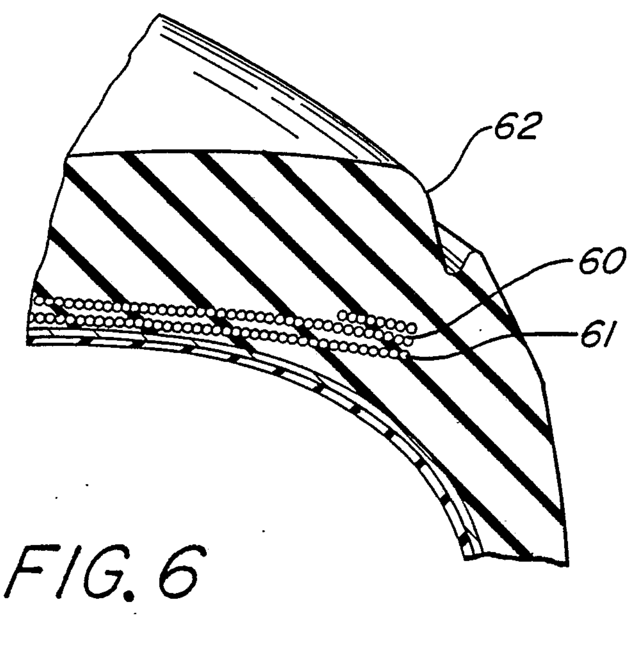


FIG. 6

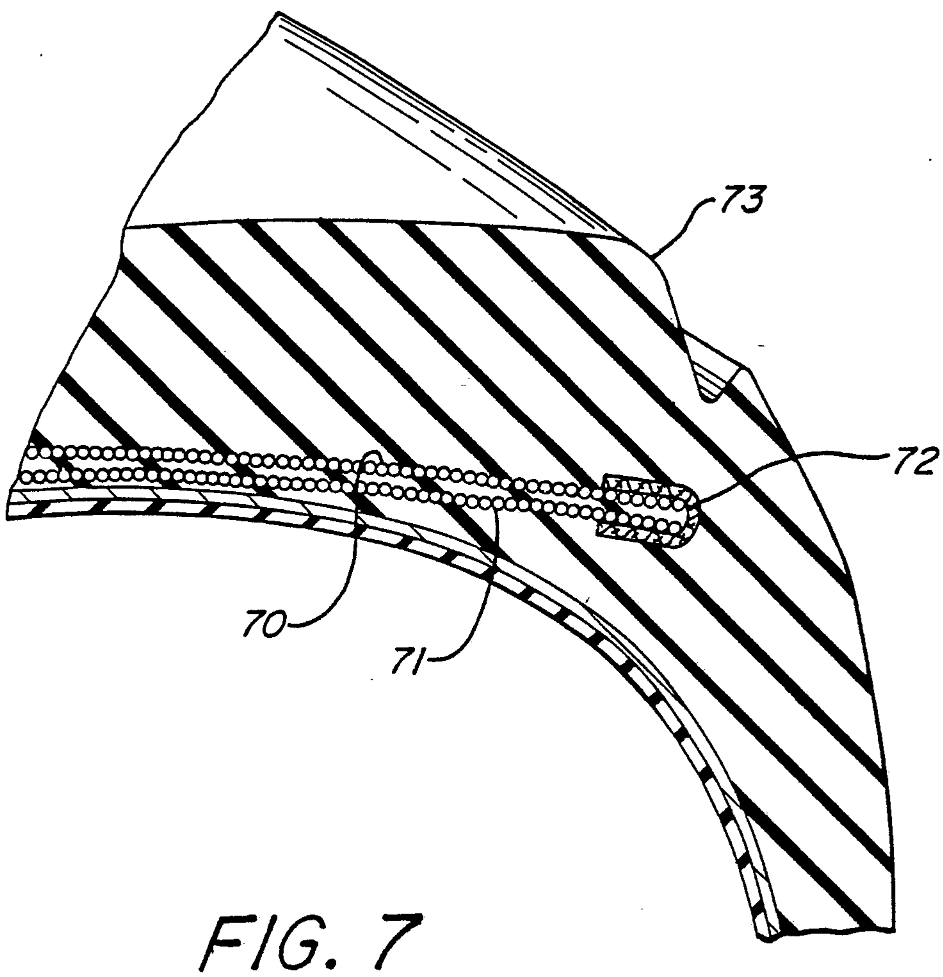


FIG. 7